# EUROPEAN PATENT APPLICATION

(11) **EP 1 862 979 A1**
(43) Date of publication of application: **05.12.2007**
(21) Application number: 07108148.3
(22) Date of filing: 24.07.2002
(51) Int. Cl.: G07F 19/00

(54) **Method for communicating a reference number over non-secure networks**

(62) Divisional of application: 02078026.8
(71) Applicant: Koninklijke KPN N.V., 9726 AE Groningen (NL)
(72) Inventor: Koster, Arian, 3641 GS Mijdrecht (NL); Wagemakers, Johannes P., 2285 JE Rijswijk (NL)

(57) **Abstract**

A method for communicating a reference number related to the purchaser's account between a customer and a merchant over a network. When completing a purchase order, the purchaser data and a predefined subset (3) of the reference number are received via a first connection (1) over a network by a computer system (6) of the merchant at the remote location (10). The information received via the first connection (1) is stored in a storage means (5) at the remote location (10). Via a second connection (13) over a network supplementary reference number digits (4) are received by an order handling system (7) at the remote location (10). An identification code (8) can be used to associate the information received via the second connection with the information received via the first connection. Concatenating both information elements results in the complete reference number.

## Description

### FIELD OF THE INVENTION

The present invention is related to communicating reference numbers over networks, in particular to a method for communicating purchase order related data over non-secure networks.

### BACKGROUND OF THE INVENTION

Making purchases over public networks is of ever-increasing importance. Merchandising over public networks like Internet comprises on-line shopping for goods or content. Although developments have been started for electronic payment concepts, the usage of credit cards is most common while placing an order via public computer-networks. Especially in cases where the merchant is not acquainted with the customer, which often is the case, credit card data should be exchanged between the customer and the merchant in order to fulfill the ordering process.

One possible way to place an order is to send the ordering information and the credit card data from the customer to the merchant over the public network. The drawback of this method is the lack of security. The security on public networks is poor, or the security of the network is at least conceived by the customer as being poor. In general, the credit card data passes through many network nodes while being transported from the customer to the merchant, providing others the opportunity to unlawfully access the credit card data.

A possible way to overcome this problem, known from United States Patent No. 5,727,163, is to let the customer initiate the order over the public computer-network entering the ordering information and entering only a subset of the credit card number. After having been received by the merchant's facilities, this part of the credit card data is stored in a storage means. The customer should then enter during a subsequent phone call the complete credit card number. The complete credit card number having been received, the subset of this credit card number will be compared with the different subsets stored in the storage means. If a subset equals the corresponding portion of the complete credit card number, then the complete credit card number will replace that subset in the storage means, so the order can be finalized. However, this known method assumes a secure public network to communicate the complete credit card number. Thus, at least the conceived non-security of public networks will not be taken away by this method, resulting in possibly more reluctant customers. Also, in case of a mobile public network this security issue could be a real threat for secure communication of the complete credit card number.
Another drawback of the method according to the prior art is the possible occurrence of duplicate subsets of credit card numbers. Two different customers may have equal subsets of their credit card numbers, resulting in non-unique subsets in the merchant's storage means. It will then not be possible to associate a complete credit card number with one single subset, and thus with one single purchase order. In such cases it will be necessary for a merchant's employee to interfere with the purchase process, or additional measures have to be taken to solve this problem.

### AIM OF THE INVENTION

It is an object of the invention to eliminate the drawbacks of the prior art and to provide a method for communicating a reference number over non-secure networks. A first object of the invention is to avoid communicating the entire reference number over a non-secure network, or a network conceived as non-secure. Additionally, another object of this invention is to provide a method for associating different purchased related information entities, each being communicated over a network.

### SUMMARY OF THE INVENTION

In accordance with an aspect of this invention, a method is defined for communicating a reference number over one or more networks between a customer location and a remote location, in particular to a method for communicating purchase order related data over non-secure networks. A reference number can be a credit card number or any other kind of identification related to a purchaser's account. In order to communicate all the information to fulfill the purchase process between the customer location and the remote location two different connections, a first connection and a second connection, can be used.

The method according to another aspect the present invention comprises the steps of:
■ completing a purchase order form that includes purchaser data and a predefined subset of the reference number,
■ receiving purchaser data and the predefined subset of the reference number at the remote location from said customer location via said first connection,
■ storing the purchaser data and the subset of the reference number in a storage means of a computer system at the remote location, said purchaser data being associated with the customer making the purchase,
■ receiving reference number related data via a second connection over a network from the customer location by an order-handling system, such as an IVR system at the remote location,
■ associating said second connection with the purchase order using the reference number related data, and the subset of the reference number transmitted via said first connection, resulting in the complete reference number corresponding to the purchase order,
■ receiving an identification code from the customer location at the remote location,
■ receiving at the remote location via said second connection reference number digits supplementary to the digits in the subset of the reference number.

The second connection can be associated with the purchase order using an identification code, after which the complete reference number is determined by concatenating the digits in the subset of the reference number, and the supplementary reference number digits.

According to an embodiment of the invention this step of the method enables a reference number to be communicated between a customer and a remote merchant using two different connections. Each connection can be established over a separate secure or non-secure network, although it is also possible that both connections are established over the same network. So, this method takes away the disadvantage of the prior art that a network, such as the public telephone network, is assumed to be a secure network, or that this network at least has to be regarded as secure by the customer. The purchase data and the predefined subset of the reference number having been received, both types of data are stored in a storage means of the merchant's computer system and associated with the customer making the purchase.

The method according to the invention can further include the step to enable the usage of an identification code by the customer, after having completed a purchase order form. This identification code is used by the customer to associate the second connection with the purchase data and the predefined subset of the reference number stored in the storage means of the merchant's computer system. The identification code relates the supplementary digits of the reference number to the stored subset of the reference number. In a specific embodiment of the method according to the invention, the identification code is a unique code, solving the problem in the prior art that a reference number occasionally cannot be associated uniquely with one single purchase order. After the supplementary digits of the reference number have been received by an automated attendant system or IVR system, these digits will be concatenated with the stored subset of the reference number, resulting in the complete reference number.

### BRIEF DESCRIPTION OF THE DRAWING FIGURE

The foregoing aspects and many of attendant advantages of this invention will become better understood by reference to the following detailed description, when taken in conjunction with the accompanying drawing, wherein:

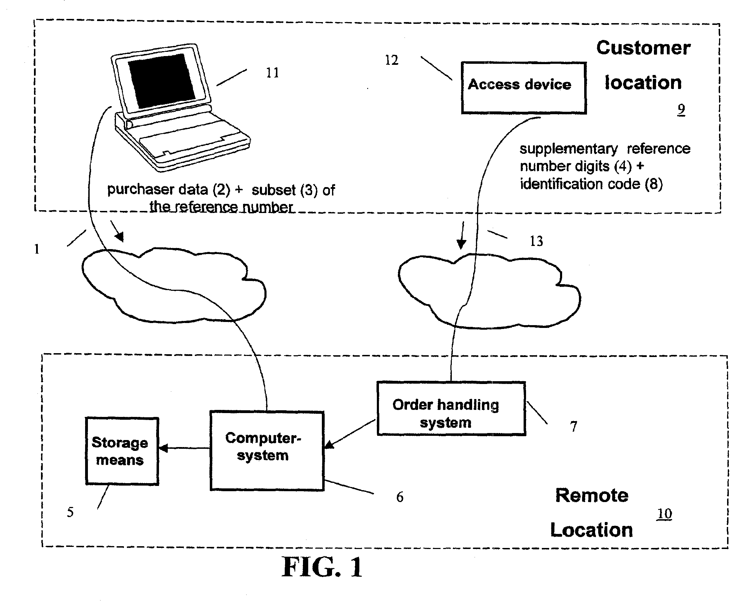

FIG. 1 is a block diagram illustrating the components involved in the communication between a customer location and a remote merchant, over a network, when receiving an order charged according to a reference number.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention con be conceived and reduced to practice without departing form the true spirit of the invention, the scope of the invention being limited only by the appended claims.

With reference to FIG. 1, the principal components used to implement the present invention are illustrated. At the top of FIG. 1, a dashed line defines a customer location (9), which in many cases will be the customer's home or place of business. The customer uses a personal computer (11), or any other type of terminal, for accessing information related to goods, services or contents that can be purchased by the customer. Peripheral devices like a modem and a mouse are not shown. The personal computer (11) may also be part of a local area network. At the customer location (9) is also an access device (12) for accessing a mobile or fixed network, such as a telephone, a laptop or a personal computer. If the access device (12) is a telephone, it preferably is a touch-tone telephone, although a pulse-type telephone also may be used with the present invention. An IP telephone may be used in connection to the present invention too. Wireless and mobile devices are also taken into account with regard to this invention, such as mobile phones and bluetooth supporting devices. In the case of the usage of a mobile device the customer location (9) is supposed to be the physical location where the customer is at the moment of making use of the devices. The personal computer (11) and the access device (12) may also be integrated within one device, such as an i-Mode handheld.

The first connection (1) that provides the customer access to the remote location (10) may be established over a public network, such as the Internet, or over a private network. The network over which the first connection is established may be a non-secure network or a network that is perceived as being non-secure, although secure networks are not excluded in relation to this invention. In case of the first connection (1) being a secure connection over a non-secure network, the method according to this invention is still relevant since it may be too complex for the customer to configure and establish such a connection. The first connection (1) is facilitated by a service provider, such as an Internet service provider, although the first connection (1) can also be facilitated by an organization operating accessibility to remote sites for specific groups of customers. In the latter case the customer is able to access directly, i.e. without using the Internet, one or more remote locations. Furthermore, the first connection can be facilitated by a private network service provider. This is often, but not necessarily, the case when the personal computer (11) is part of a local area network.

The physical connection between the personal computer (11) and the network over which the first connection (1) is established, can be through a modem and a telephone line, a networking device and a leased line, or any types of wireless connection means. The details of the type of connection between the personal computer (11) and the network are of no consequence in the present invention.

If the network over which the first connection (1) is established is a public network, then it is in general not operated end-to-end by one single operator. Although this holds for the network on carrier network level, network domains are often managed and operated by one single operator. The Internet is an example of a network that provides the customer access to sites where goods, services and content can be ordered on-line, which is not operated end-to-end by one single operator. These types of sites reside at a physical location like the remote location (10) depicted in FIG 1. A computer system (6) at the remote location (10) is connected to the network over which the first connection (1) is established by means of one or more network devices, such as a router, and high-speed data connections. Usually, the computer system is protected against threats originating from a non-secure network by means of a fire-wall (not shown). Another entity at the remote location (10) is an order-handling system (7), such as an Interactive Voice Response system, which can be accessed via a second connection (13) over a network. The first connection (1) and the second connection (13) can be established over different networks although this is not necessarily according to this invention, since both connections may be established over the same network.

As discussed above in the background, customers are reluctant to use a public network, such as Internet, for making purchases and thus communicating reference numbers that are related to a purchaser's account over the Internet. Alternatively, the customer is instructed to enter a predefined subset (3) of the reference number, such as the last n digits of the reference number. Next, the customer will then be completing the purchase order form that includes purchaser data (2) and the predefined subset (3) of the reference number. The purchaser data (2) and the subset (3) of the reference number are then received by the remote location (10) from the customer location (9) via the first connection (1). At the remote location (10) the purchaser data (2) and the subset (3) of the reference number are stored in a storage means (5) of the computer system (6). This data will then be associated with the customer making the purchase.

The customer can be instructed to make use of a second connection (13), such as a telephone connection set up by dialing 0800- or another telephone number. Displaying on the screen the instruction including information about how to set up the second connection (13) can accomplish this. The method according to the invention includes the step that the instruction can also include an identification code (8) that can be used by the customer to make a reference to the purchase order. The identification code (8) can be provided by the computer system (6) to the customer by means of displaying the identification code (8) on the screen. Alternatively, the identification code (8) can also be provided by the personal computer (11) to the computer system (6). In this latter case, the identification code (8) corresponds to a worldwide unique identification code attached to the personal computer (11). In the case that the identification code (8) is provided by the personal computer (11) to the computer system (6), the identification code (8) can be displayed on the screen so that it can be used by the customer while using the second connection (13). The customer can also be instructed to wait a short time before initiating the second connection. This is because time is needed for the computer system (6) to process the received data, sent by the customer.

Establishing a second connection (13) connects the customer to the order-handling system (7). The customer will be asked by an order-handling system to enter the identification code (8). If the access device (12) is a pulse tone telephone, it is possible to connect the customer to a telephone-operator who can collect the required information from the customer. After having entered the identification code (8), the customer enters the reference number digits (4) supplementary to the digits in the subset (3) of the reference number, the latter being already available in the storage means (5) at the remote location (10). The second connection (13) is associated with the purchase order, and the complete reference number can be determined by concatenating the digits in the subset (3) of the reference number and the supplementary digits (4) that are entered via the second connection (13).

If the identification code (8) provided to the customer is unique, there are no additional measures needed to solve ambiguousness. In this case, the procedure for receiving data by the order-handling system (7) or a telephone-operator via the second connection (13) can be relatively simple.

## Claims

1. Method for receiving a purchase order by a remote location (10) from a customer location (9) via a first connection (1) over a network, to enable a purchase relating to a reference number, comprising the steps of:
■ completing a purchase order form that includes purchaser data (2) and a predefined subset (3) of the reference number,
■ receiving purchaser data (2) and the predefined subset (3) of the reference number at the remote location (10) from said customer location (9) via said first connection (1),
■ storing the purchaser data (2) and the subset (3) of the reference number in a storage means (5) of a computer system (6) at the remote location (10), said purchaser data being associated with the customer making the purchase,
■ receiving reference number related data via a second connection (13) over a network from the customer location (9) by an order-handling system, such as an IVR system (7) at the remote location (10),
■ associating said second connection (13) with the purchase order using the reference number related data, and the subset (3) of the reference number transmitted via said first connection (1), resulting in the complete reference number corresponding to the purchase order,
■ receiving an identification code (8) from the customer location (9) at the remote location (10),
■ receiving at the remote location (10) via said second connection (13) reference number digits (4) supplementary to the digits in the subset (3) of the reference number.

2. Method according to claim 1, wherein said second connection (13) is associated with the purchase order using said identification code (8).

3. Method according to claim 1, wherein the complete reference number is determined by concatenating the digits in the subset (3) of the reference number and the supplementary reference number digits (4).

4. Method according to claim 1, wherein said first connection (1) is a connection over a non-secure network.

5. Method according to claim 1, wherein said second connection (13) is a connection over a public telephone system.

6. Method according to claim 1, wherein said first connection (1) and said second connection (13) are connections over the same network.

7. Method according to claim 1, wherein the identification code (8) is shown on-line to the customer after the customer has completed said purchase order form, and the identification code (8) is received from the customer via said second connection (13).

8. Method according to claim 1, wherein the identification code (8) is provided by said computer system (6) to the customer, and the identification code (8) is received from the customer via said second connection (13).

9. Method according to claim 1, wherein the identification code (8) is received from a personal computer (11) at the customer location (9) by said computer system (6) at the remote location (10).

10. Method according to any of the preceding claims, wherein said reference number is a credit card number.

11. Method according to any of the preceding claims, wherein the identification code (8) is a unique code.
